# EUROPEAN PATENT APPLICATION

(11) **EP 2 145 806 A1**
(43) Date of publication of application: **20.01.2010**
(21) Application number: 08012670.9
(22) Date of filing: 14.07.2008
(51) Int. Cl.: B60S 1/50

(54) **Window de-icing system**

(71) Applicant: FICO TRANSPAR, S.A., 08191 Rubi (Barcelona) (ES)
(72) Inventor: Miguel Mota, Lopez, Rubi (Barcelona) (ES); Augustin Enrique Gonzales Leal, San Nicolas de los Graza, N.L. (MX)
(74) Representative: Hess, Peter K. G.

(57) **Abstract**

The present invention relates to a window de-icing system 1 comprising a heating chamber 12, 13 with at least one heating element 4 for heating a liquid, an inlet 20 for inserting the liquid into the heating chamber 12, 13 and an outlet 22 for dispensing the liquid out of the heating chamber 12, 13; a piston 10, which can be moved hydraulically within the heating chamber 12, 13 into a first direction 14 and separates the heating chamber 12, 13 into a first chamber 12 which is connected to the inlet 20 and a second chamber 13 which is connected to the outlet 22, wherein the at least one heating element 4 is arranged within the second chamber 13, and the piston 10 can be hydraulically moved into the first direction 14 at least partially by means of the liquid which is introduced through the inlet 20 into the first chamber 12 such that liquid is dispensed from the second chamber out of the outlet 22.

## Description

### 1. Technical field

The present invention relates to a window de-icing system for de-icing of a window or motor vehicle screen, particularly a windscreen.

### 2. Prior art

All kind of vehicles meet in cold environments the problem of iced windows. Since manual, mechanical de-icing is exhausting and time consuming there are known from prior art systems for automatically de-icing of windows.

DE 100 28 362 A1 discloses a de-icing system for de-icing a window pane, in particular a window pane of a motor vehicle with a reservoir for receiving a de-icing liquid, a heating element for heating the de-icing liquid, a pump pumping the de-icing liquid from the reservoir through the heating element to at least one outlet, wherein the at least one outlet is shaped such that the heated de-icing liquid is finely nebulized and precipitates as distributed hot droplets on the window pane to be de-iced.

WO 98/58826 discloses an apparatus for cleaning a window of a vehicle, including a vessel, having an inlet through which a washing fluid is received from a reservoir and an outlet through which the fluid is discharged for cleaning the window. The apparatus comprises a heating element for heating the fluid in the vessel. The element preheats the vessel before the washing fluid is received therein, whereby at least an initial quantity of the fluid is rapidly heated and discharged from the vessel. The filling of a heating chamber with a washing fluid by pumps is controlled by solenoid valves. These solenoid valves have some severe drawbacks: They have a quite high flow resistance, they need a continuous voltage supply in opened position and they are expensive and error-prone. However, without these solenoid valves an undesirable circulation of the washing fluid in the system occurs during heating which leads to high heat losses and increases the warming-up time of the washing fluid substantially.

Therefore the problem of the present invention is to provide a window de-icing system, which shortens the warm-up time of the liquid, reduces the heat loss and avoids undesirable circulation of the liquid in the system. Furthermore, the window de-icing system should be reliable and cost-efficient.

### 3. Summary of the invention

The above mentioned problem is solved by a window de-icing system according to claim 1. Advantageous embodiments are defined in the dependent claims.

The window de-icing system according to the invention comprises a heating chamber with at least one heating element for heating a liquid, an inlet for inserting the liquid into the heating chamber and an outlet for dispensing the liquid out of the heating chamber. The window de-icing system further comprises a piston, which can be moved within the heating chamber into a first direction and separates the heating chamber into a first chamber which is connected to the inlet and a second chamber which is connected to the outlet, wherein the at least one heating element is arranged within the second chamber, and the piston can be hydraulically moved into the first direction at least partially by means of the liquid which is introduced through the inlet into the first chamber such that liquid is dispensed from the second chamber out of the outlet.

As the heating chamber is separated by the piston into a first and second chamber the liquid, which is heated in the second chamber, does not mix with cold liquid within the rest of the system.

The piston further separates the heating chamber from the rest of the window de-icing system, such that a running-back of the liquid into its reservoir and an undesirable circulation of the heated liquid in the system are avoided. No mixture of hot and cold liquid takes place and therefore the heat loss and the warm-up time is significantly reduced.

Further, the window de-icing system can be mounted in an arbitrary position and orientation within the vehicle, since the system can be favourably arranged hydraulically behind a pump and due to the inventive heating chamber with piston it is always completely filled with liquid. The system therefore operates independent of gravity effects.

In a first preferred embodiment the de-icing system further comprises a valve, which in closed condition closes inlet and outlet but allows a flow of liquid between first chamber and second chamber. By means of the valve, the heating chamber is separated from the rest of the system, but a liquid exchange between first chamber and second chamber is possible. In the closed valve position the piston can move in a second direction, wherein the cold liquid of the first camber above the piston flows to the second chamber below the piston.

Preferably the valve is biased to the closed position by means of a third spring and is preferably opened at least partially by means of the hydraulic pressure of liquid introduced into the inlet. By providing such a spring biased and hydraulically actuated valve the valve is very reliable and does not need further electrical control or the like. It is sufficient that the inlet is set under pressure to open the valve which separates the heating chamber from the rest of the system.

Preferably, the valve in open condition opens inlet and outlet but prevents a flow of liquid between first chamber and second chamber. This guarantees that the heated liquid in the second chamber is separated from the cold liquid in the first chamber by means of the piston.

In a further embodiment the piston comprises at least one intercommunication valve, which in open position allows a flow of the liquid from the first chamber to the second chamber and which in closed position blocks the flow of the liquid between the first chamber to the second chamber, wherein the intercommunication valve is in its closed position when the piston moves into the first direction. The intercommunication valve allows in open position that the piston can move in the second direction, wherein the cold liquid of the first camber above the piston flows to the second chamber below the piston. In closed position the intercommunication valve guarantees that the heated liquid in the second chamber is separated from the cold liquid in the first chamber by means of the piston.

In a further preferred embodiment the intercommunication valve is in its opened position when no hydraulic pressure is applied to the inlet. The window de-icing system is advantageously controlled by the hydraulic pressure applied to the inlet of the heating chamber which is generated by a pump of the existing window cleaning system. The window de-icing system can therefore be easily integrated into existing window cleaning systems.

Preferably, the intercommunication valve is in its opened position when the piston is moved into the second direction. If the piston moves into the second direction the liquid can flow from the first chamber into the second chamber.

Preferably, the intercommunication valve is opened by means of mechanical force, in particular by means of a second spring.

In a further preferred embodiment the intercommunication valve is a one-way valve, which is closed, when the piston moves in the first direction.

Preferably, the piston closes the inlet of the heating chamber during the heating process. This further prevents an undesired circulation of the heated liquid through the system.

Preferably, the piston is moved into the second direction by means of a first spring. The first spring moves the piston back into an initial upper position in which the liquid in the lower second chamber can be heated.

In a further preferred embodiment the window de-icing system comprises and electronically controlled change-over valve which is arranged before the inlet in order to bypass the de-icing system. The change-over valve is used to bypass the heating chamber in case only a cleaning of the windscreen is desired or a failure of the heating chamber occurs.

In a further preferred embodiment the window de-icing system comprises a sensor for measuring the temperature of the liquid. The dispensing of the heated liquid can be started automatically when a desired liquid temperature is reached.

Preferably, the inlet of the heating chamber is connected to the outlet of a pump of a conventional window cleaning system and the outlet of the heating chamber is connected to nozzles. In this way the window de-icing system may be retrofitted and integrated into conventional window cleaning systems. In this case preferably no additional pump is needed and used for the window de-icing system itself.

### 4. Short description of the drawings

Advantageous embodiments of the present invention are described in the following with reference to the drawings, in which:
- Fig. 1 and 2: show three-dimensional views of an embodiment of the window de-icing system according the invention.

- Fig. 3: shows a three-dimensional exploded view of an embodiment of the window de-icing system according the invention;
- Fig. 4: shows sectional views through an embodiment of the window de-icing system to explain function steps during a window de-icing process;
- Fig. 5: shows a preferred wiring diagram of a window de-icing system within a vehicle;
- Fig. 6: shows a sectional view of a change-over valve for the window de-icing system;
- Fig. 7: shows a sectional views through a further embodiment of the window de-icing system with a valve in a first stage and a change-over valve according Fig. 6;
- Fig. 8: shows a sectional views the embodiment of Fig. 7 if pressure is applied to the inlet and the piston moves to the first direction; and
- Fig. 9: shows a sectional views the embodiment of Fig. 7 if no pressure is applied to the inlet and the piston moves to the second direction.

### 5. Description of advantageous embodiments

In the following, with reference to the drawings, advantageous embodiments of the present invention are described. The same reference numbers describe like element over the several embodiments.

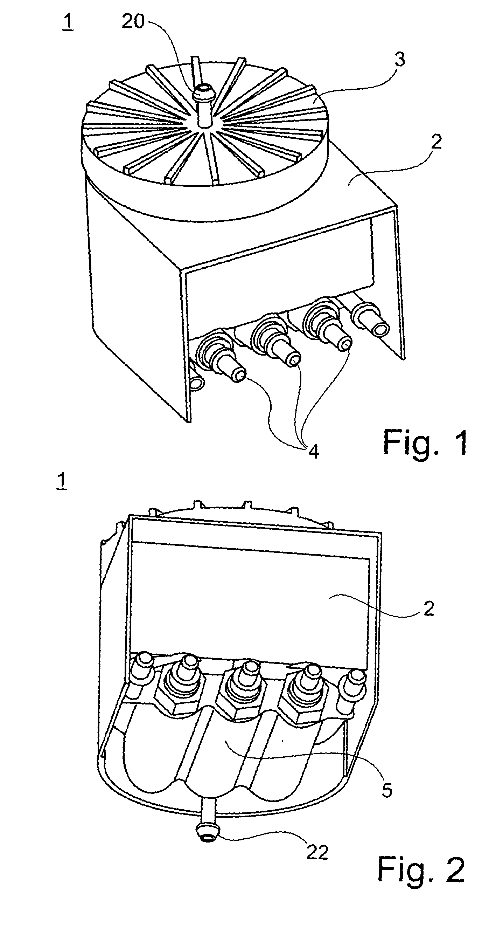

As can be seen in Figs. 1 and 2, the first embodiment of the window de-icing system 1 comprises at least a housing 2 and a heating chamber 12, 13 with at least one heating element 4 for heating a liquid. The heating chamber 12, 13 is closed to the top by a cover 3.

The liquid which is heated by the window de-icing system can be plain water or a water-alcohol mixture to avoid freezing of the liquid in the pipes and to improve the de-icing effect. Commercially available window cleaning liquids may also be used as liquid to de-ice or de-frost the window.

The at least one heating chamber 12, 13 comprises at least one inlet 20 for inserting the liquid into the heating chamber 12, 13 and at least one outlet 22 for dispensing the liquid out of the heating chamber 12, 13.

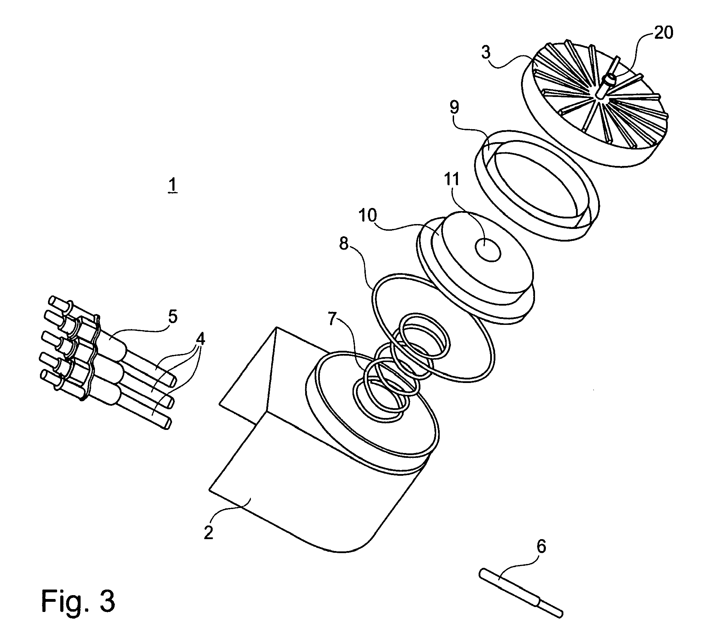

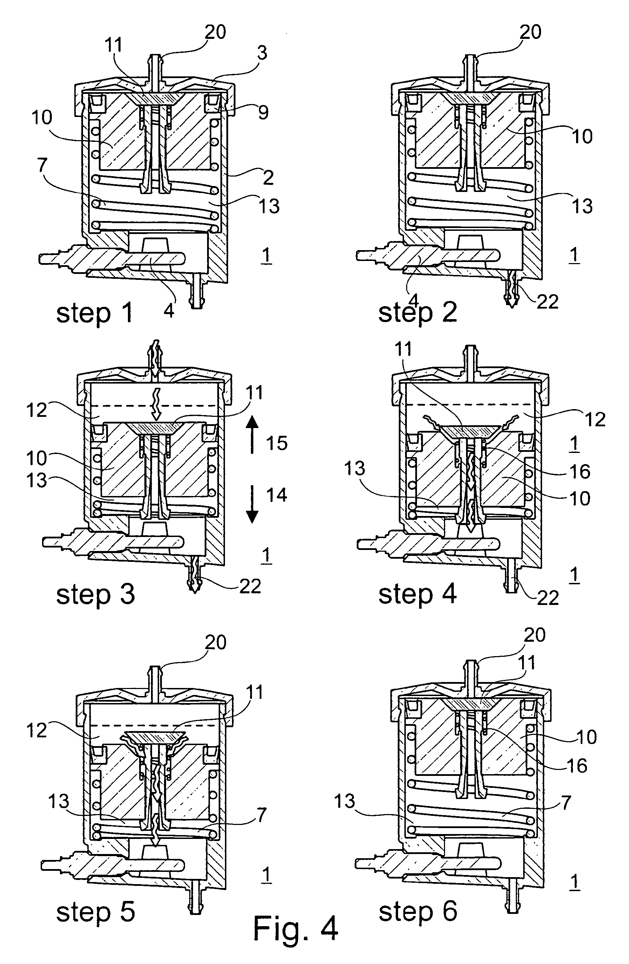

As can be seen in Figs. 3 and 4, the window de-icing system 1 comprises further at least one piston 10, which is moved hydraulically into a first, a lower direction (marked by arrow 14 in Fig. 4) and separates the heating chamber 12, 13 into a first, an upper chamber 12 and a second, a lower chamber 13. The upper chamber 12 increases in volume if liquid is introduced into the inlet 20, wherein simultaneously liquid is dispensed through the outlet 22 an the lower chamber 13 decreases in volume.

The piston 10 comprises at least one intercommunication valve 11, which allows in open position a flow of the liquid from the first, the upper chamber 12 to the second, the lower chamber 13.

The piston 10 comprises also a liquid tight seal 9 which seals the piston 10 within the heating chamber 12, 13. A seal 8 is arranged between the cover 3 and the housing 2. These seals 8, 9 are provided as circular sealing rings.

The window de-icing system 1 comprises heating elements 4, which are grouped as a heating module 5. The heating elements 4 are electrical heating resistances, which are connected to supply wires (not shown) by screw terminals.

The window de-icing system 1 further comprises a sensor 6 for measuring the temperature of the liquid.

The housing 2 of the window de-icing system 1 preferably has a width between 60 to 80 mm. The height of the window de-icing system 1 may be between 80 to 100 mm, including inlet 20 and outlet 22, or 60 to 80 mm without inlet 20 and outlet 22.

The piston 10 separates the lower chamber 13 in which the liquid is heated, from the upper chamber 12 into which for dispensing of the liquid cold liquid is introduced. This prevents intermixing of the cold liquid with hot liquid, which overall reduces the heat loss.

As can be seen in Fig. 4, the piston 10 is preferably moved quasi automatically by means of a hydraulic force of the liquid into a first direction (marked by arrow 14 in Fig. 4) and therefore there is no need for a cost-efficient and error-prone additional control. The piston 10 can be moved into a second direction (marked by arrow 15 in Fig. 4) by means of mechanical force, in particular by means of a spring 7. The force of the spring 7 is adapted to return the piston 10 against the static liquid pressure within the upper chamber 12 if the intercommunication valve 11 has opened.

The at least one intercommunication valve 11 (see Fig. 4) allows flow of the liquid from the first chamber to the second chamber, when the piston 10 is not pressed down into the first direction 14 by means of the liquid pumped into the upper chamber 12. It blocks the flow of the liquid between the first chamber and the second chamber, when the liquid of the first chamber pushes the piston 10 hydraulically in the first direction 14. Therefore, the at least one intercommunication valve 11 is a one-way valve 11, which is closed, when the piston 10 moves in the first direction, whereas it is opened by the force of a valve spring 16, when the piston 10 does not move or moves into the second direction 15.

The intercommunication valve 11 (see Fig. 3) is provided as a round valve with truncated conical section which is arranged in the centre of the piston 10. If the piston 10 is in its upper position, shown in Fig. 4a, the piston 10 by its intercommunication valve 11 seals the inlet 20 of the heating chamber 12, 13 during the heating process.

The inlet 20 may be connected to the outlet 22 of a pump 102 of a conventional window cleaning system 100 and the outlet 22 may be connected to nozzles 107. Like this, the window de-icing system 1 may easily be integrated and/or refitted in existing, conventional window cleaning systems 100.

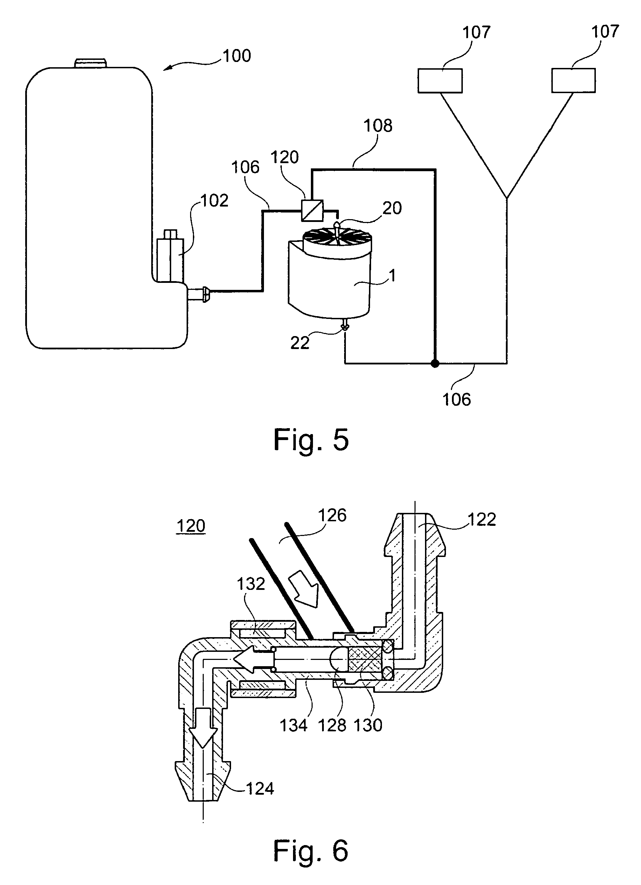

Advantageously, as can be seen in Fig. 5, no additional pump is needed for the window de-icing system 1. The existing pump 102 of the conventional window cleaning system 100 conveys the heated liquid from the lower chamber 13 via tubes 106 to the nozzles 107 by pumping cold liquid from its reservoir in the upper chamber 12. The complexity of the system and its assembly is therefore substantially reduced and the system can be arbitrary positioned. Between pump 102 and inlet 20 an electrically controlled change-over valve 120 can be arranged which allows the liquid to bypass the de-icing system 1 in case no heating of the liquid is required or the de-icing system 1 has a malfunction. If the change-over valve 120 is set to the bypass state the liquid flows from the pump 102 through the bypass tube 108 directly to the nozzles 107 and not through the de-icing system 1.

### Fig. 4 shows the window de-icing procedure in 6 steps:

In step 1, the piston 10 is moved to the area of the upper chamber 12 by first spring 7 and the lower chamber 13 is filled with cold liquid. Inlet 20 is closed by intercommunication valve 11.

In step 2, the heating of the liquid in the lower chamber 13 starts by activating of the heating elements 4. The liquid in the lower chamber 13 is heated up until the sensor 6 measures a temperature e.g. between 60°C and 90°C.

In step 3, the system initiates the operation of the pump 102 (see Fig. 5) which pumps cold liquid into the upper chamber 12. By means of the hydraulic pressure of the cold liquid the piston 10 moves into the first direction 14. Thereby, the hot liquid in the lower chamber 13 is displaced with high pressure through the outlet 22 towards the nozzles 107. In the preferred embodiment ca. 100 cm³ of hot liquid is displaced in 4 seconds.

It should be understood that it is preferred to use the hydraulic pressure of the liquid alone to move the piston 10 into the first direction 14. However, additional means (not shown) for supporting this movement of piston 10 may be provided. Such means may include mechanical, electrical, magnetic means, for examples springs, motors or solenoids.

In step 4, the piston 10 reaches the lower end of the heating chamber 13, 14. The hot liquid is dispensed and the pump 102 ceases operation. Therefore, the hydraulic pressure in the upper chamber 12 upon the piston 10 decreases and the valve spring 16 opens the intercommunication valve 11. This allows a flow of cold liquid from the upper chamber 12 through the intercommunication valve 11 to the lower chamber 13.

In step 5, as the liquid flows from the upper chamber 12 into the lower chamber 13 the piston 11 moves in second direction 15 by means of the force of first spring 7.

In step 6, the piston 10 reaches the upper end of the heating chamber 12, 13 and the cold liquid of the upper chamber 12 is completely fed into the lower chamber 13. The force of spring 7 presses the piston to the cover 3 such that the intercommunication valve 11 is closed and also closes the inlet 20.

In Fig. 6 details of the change-over valve 120 are shown in the normal position. As shown the liquid flows through inlet connector 126 and enters the valve housing 134 through inlet hole 128. A magnetic valve slider 130 is in the right position and closes the outlet 122 to the spray heads 107. Therefore the liquid flows from the valve housing 134 to the de-icing outlet 124 as shown by the arrows. The de-icing outlet 124 is connected to the inlet 20 of the de-icing system 1.

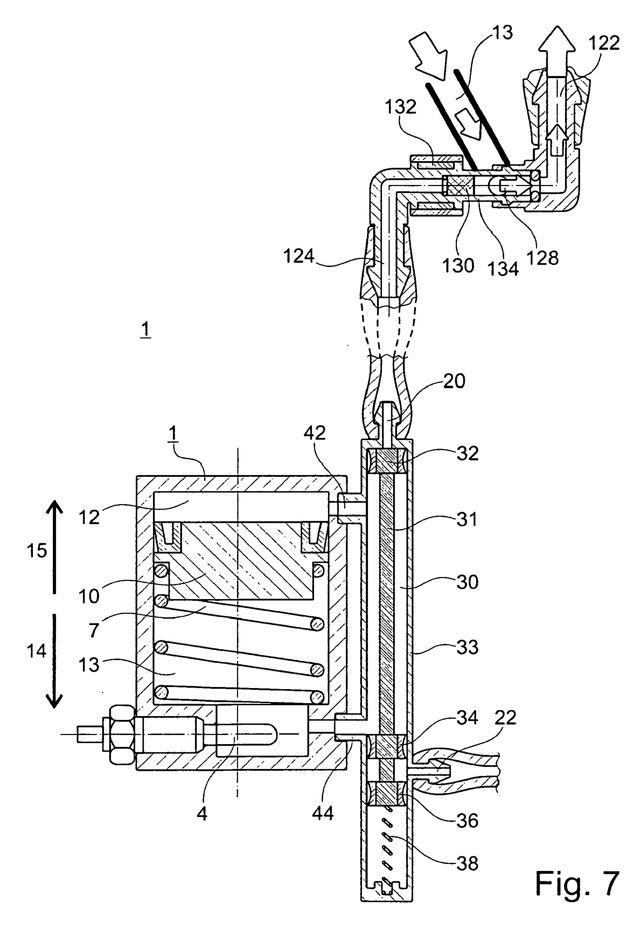

In case it is desired to bypass the de-icing system 1 a solenoid 132 is electrically actuated which draws the valve slider 130 to the left and closes the de-icing outlet 124. Instead the outlet 122 to the spray heads 107 is open and the liquid may flow directly to the spray heads 107 via bypass tube 108. Fig. 7 shows this state when the de-icing system 1 is bypassed.

Figures 7-9 show a further embodiment of a de-icing system 1. Compared to the embodiment of Figures 1 - 4 the piston 10 does not have an intercommunication valve 11 any more. Instead a valve 30 is provided, which closes inlet 20 and outlet 22 in case no liquid pressure is applied to the inlet. The other elements remain basically the same and have the same function.

The valve 30 comprises a valve slider 31 which can be axially displaced within a valve housing 33. The valve slider 31 comprises a seal 32 which can open and close inlet 20 and two seals 34, 36 which can open and close outlet 22. The valve slider 31 is biased to the closed position, i.e. to the top, by means of a spring 38. This closed position is shown in Fig. 6. In this closed position of the valve 30 the window de-icing system 1 is hydraulically separated form the rest of the system such that no undesired circulation of heated liquid can occur and the liquid heats up more quickly. Further, during heating the liquid a pressure may be build up in the de-icing system 1 which may further increase the de-icing effect.

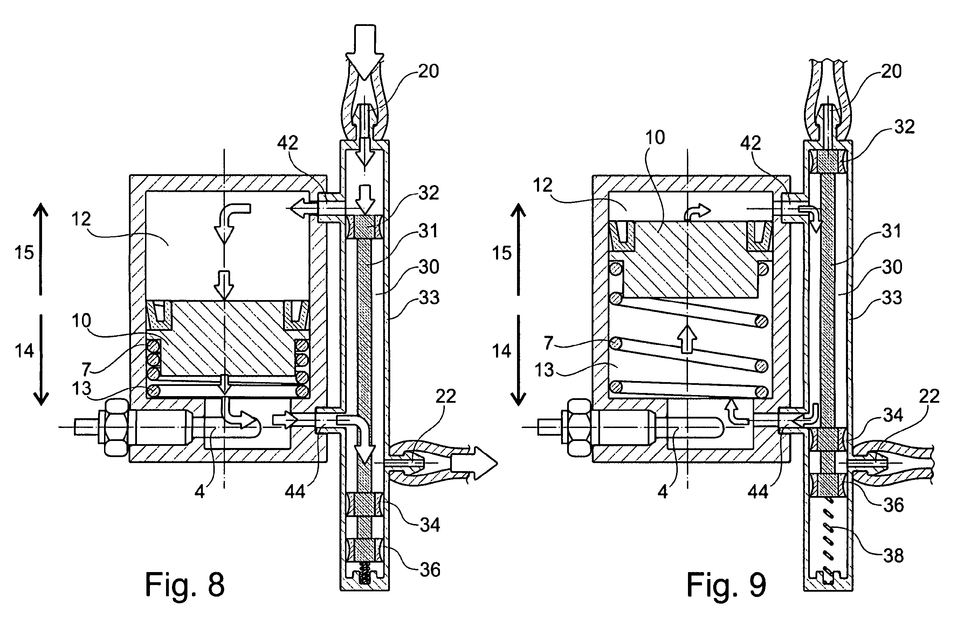

If liquid pressure is applied by the pump 102 to the inlet 20 the valve slider 31 is moved to the open position as shown in Fig. 8. In this position the liquid flows from the inlet 20 through the opening 42 into the first chamber and presses the piston to the first direction 14. This presses the heated water out of the second chamber 13, through the opening 44 to the outlet 22 and finally to the nozzles 107 in order to de-ice the respective window. Thereby, the piston 10 moves in the second direction 14 and compresses the spring 7.

It should be understood that it is preferred to use the hydraulic pressure of the liquid alone to move the valve slider 31 to the open position of valve 30. However, additional means (not shown) for supporting the opening movement of valve 30 may be provided. Such means may include mechanical, electrical, magnetic means, for examples springs, motors or solenoids.

After the hot liquid is dispensed, the pump 102 stops and the piston 10 moves to the first direction 15 due to the spring 7. Thereby, the piston 10 presses the cold liquid out of the first chamber 12 through the opening 42, the valve housing 33 and the opening 44 into the second chamber 13 as shown in Fig. 9 by the arrows. The liquid can then be heated in the second chamber by a heating element 4.

Most parts of the window de-icing system 1 consist out of plastic materials, except the seals which are made of an elastomer material and springs which are made of steel.

### Reference numbers

- 1: window de-icing system
- 2: housing
- 3: cover
- 4: heating elements
- 5: heating elements unit
- 6: temperature sensor
- 7: first spring
- 8: seal between cover and housing
- 9: seal of piston
- 10: piston
- 11: intercommunication valve
- 12: upper chamber
- 13: lower chamber
- 14: first direction
- 15: second direction
- 16: second spring
- 20: inlet
- 22: outlet
- 30: valve
- 31: valve slider
- 32, 34, 36: seals
- 33: valve housing
- 38: third spring
- 42: opening
- 44: opening
- 100: window cleaning and de-icing system
- 102: pump
- 106: tubes
- 107: nozzles
- 108: bypass tube
- 120: change-over valve
- 122: outlet connector to nozzles
- 124: outlet connector to de-icing system
- 126: inlet connector
- 128: inlet hole
- 130: valve slider
- 132: solenoid
- 134: valve housing

## Claims

1. Window de-icing system (1) comprising:
a. a heating chamber (12, 13) with at least one heating element (4) for heating a liquid, an inlet (20) for inserting the liquid into the heating chamber (12, 13) and an outlet (22) for dispensing the liquid out of the heating chamber (12, 13);
b. a piston (10), which can be moved hydraulically within the heating chamber (12, 13) into a first direction (14) and separates the heating chamber (12, 13) into a first chamber (12) which is connected to the inlet (20) and a second chamber (13) which is connected to the outlet (22), wherein
c. the at least one heating element (4) is arranged within the second chamber (13), and
d. the piston (10) can be hydraulically moved into the first direction (14) at least partially by means of the liquid which is introduced through the inlet (20) into the first chamber (12) such that liquid is dispensed from the second chamber out of the outlet (22).

2. Window de-icing system according to claim 1, further comprising a valve (30), which in closed condition closes inlet (20) and outlet (22) but allows a flow of liquid between first chamber (12) and second chamber (13).

3. Window de-icing system according to claim 2, **characterized in that** the valve (30) is biased to the closed position by means of a third spring (38).

4. Window de-icing system according to one of the claims 2 or 3, **characterized in that** the valve (30) is opened at least partially by means of the hydraulic pressure of liquid introduced into the inlet (20).

5. Window de-icing system according to one of the claims 2 - 4, **characterized in that** the valve (30) in open condition opens inlet (20) and outlet (22) but prevents a flow of liquid between first chamber (12) and second chamber (13).

6. Window de-icing system according to claim 1, **characterized in that** the piston (10) comprises at least one intercommunication valve (11), which in open position allows a flow of the liquid from the first chamber (12) to the second chamber (13) and which in closed position blocks the flow of the liquid between the first chamber (12) to the second chamber (13), wherein the intercommunication valve (11) is in its closed position when the piston (10) moves into the first direction (14).

7. Window de-icing system according to claim 6, **characterized in that** the intercommunication valve (11) is in its opened position when no hydraulic pressure is applied to the inlet (20).

8. Window de-icing system according to one of the claims 6 or 7**, characterized in that** the intercommunication valve (11) is in its opened position when the piston (10) is moved into the second direction (15).

9. Window de-icing system according to one of the claims 6 - 8, **characterized in that** the intercommunication valve (11) is opened by means of mechanical force, in particular by means of a second spring (16).

10. Window de-icing system according to one of the claims 6 - 9, **characterized in that** the intercommunication valve (11) is a one-way valve, which is closed, when the piston (10) moves in the first direction (14).

11. Window de-icing system according to one of the preceding claims, **characterized in that** the piston (10) closes the inlet (20) during the heating process.

12. Window de-icing system according to one of the preceding claims, **characterized in that** the piston (10) is moved into the second direction (15) by means of a first spring (7).

13. Window de-icing system according to one of the preceding claims, **characterized in that** the de-icing system comprises an electronically controlled change-over valve (120) which is arranged before the inlet in order to bypass the de-icing system.

14. Window de-icing system according to one of the preceding claims, **characterized in that** it further comprises at least one sensor (6) arranged within the second chamber (13) for measuring a temperature of the liquid.

15. Window de-icing system according to one of the preceding claims, **characterized in that** the inlet (20) of the heating chamber (12, 13) is connected to the outlet of a pump (102) of a conventional window cleaning system (100) and the outlet (22) of the heating chamber (12, 13) is connected to nozzles (107).
